# EUROPEAN PATENT SPECIFICATION

(11) **EP 3 087 016 B1**
(45) Date of publication and mention of the grant of the patent: **01.02.2023**
(21) Application number: 14833246.3
(22) Date of filing: 19.12.2014
(51) Int. Cl.: B65G 17/08, B65G 17/40

(54) **A CONVEYOR BELT WITH ARTICULATED LINKS**
FÖRDERBAND MIT GELENKVERBINDUNGEN
BANDE TRANSPORTEUSE À MAILLONS ARTICULÉS

(30) Priority: 23.12.2013 IT BO20130715
(43) Date of publication of application: 02.11.2016
(73) Proprietor: BETT SISTEMI s.r.l., 41012 Carpi (Modena) (IT)
(72) Inventor: BETTATI, Tienno, I-42015 Correggio (Reggio Emilia) (IT)
(74) Representative: Fanzini, Valeriano
(86) International application number: PCT/IB2014/067126
(87) International publication number: WO 2015/097610

(56) References cited:
- EP-A1- 1 647 504
- EP-A1- 1 714 920
- DE-A1- 2 300 202
- DE-A1- 19 856 908
- GB-A- 2 225 761
- US-A- 5 605 219

## Description

### Technical field

This invention relates to a conveyor belt of the type with articulated links, for conveying products, in particular in plants, industrial machines or working areas in general.

### Background art

There are prior art conveyors for conveying products, which are used in plants or industrial machinery, comprising a belt with articulated links, which extends along a closed loop configuration defining, in use, a respective positive path for conveying products, and a negative return stretch of the belt.

In the prior art conveyors, the respective link comprises a longitudinal portion for articulated connection to the adjacent links of the conveyor belt, supporting a portion extending transversely for sustaining the product to be conveyed.

A drawback in the use of these prior art conveyors concerns the safety of the personnel responsible for supervision and maintenance of the apparatuses.

In effect, in these prior art conveyor, there is generally a risk that the product conveyed or parts of the body, in particular the fingers, of the personnel, or parts of the clothing of the personnel, can be inserted between the links of the conveyor, with the consequent risk of gripping, injury or damage in general.

To overcome as much as possible this drawback, the manufacturers of conveyors with articulated links have prepared the links which have the product sustaining portion, which is configured with a lowered part and a raised part, to prevent along the curved paths in the horizontal plane or coplanar with the product sustaining plane of the conveyor belt the insertion of the fingers of the personnel or part of the product between the same links of the conveyor belt.

However, these prior art conveyors still leave large spaces between the links in the connecting or reversing stretch between the upper stretch for feeding the product and the lower return stretch of the belt, with consequent risk of insertion of the fingers or other parts of the body of the personnel and consequent risk of injury for the personnel.

DE19856908 relates to a chain element for a curve-going conveyor chain, comprising a support plate which is provided with link lugs on opposite leading edges, said link lugs forming links with the link lugs of adjacent chain elements respectively by means of connecting pins; covering segments extend outwards as far as the leading edges of the support plate under the support plate of the adjacent chain element. GB2225761A discloses a conveyor belt according to the preamble of claim 1.

### Summary of the invention

This invention proposes a novel solution, alternative to the solutions known up to now and which can overcome one or more of the above mentioned drawbacks and/or meet one or more of the needs mentioned in or inferable from the above.

A conveyor belt according to claim 1 is therefore provided, of the type with articulated links, preferably usable for conveying products, in particular in a respective plant, industrial machine or working area; the belt extending according to a closed loop configuration defining at least one curved connecting stretch extending in a plane perpendicular to the belt, the respective link of the conveyor comprising an inner portion for articulated connection to the adjacent links of the conveyor belt, supporting an outer portion, extending transversely, for sustaining the product to be conveyed, the portion for sustaining the product comprising a lowered part and a raised part; characterised in that the respective longitudinal end of the raised part is designed to be positioned, in the curved connecting stretch of the belt, radially at, or radially on the extension of the longitudinal end of the lowered part of the adjacent link, in particular of the following link.

In this way, it is possible to define, in the connecting stretches, in particular ends, of the conveyor belt, a longitudinal space between the transversal portions for sustaining products of successive links, which is particularly reduced in size and such as to overcome the risk that the operators can accidentally insert the fingers, or other parts, between the links of the conveyor, and run the risk of injuries or damage in general.

### Brief Description of the Drawings

These and other innovative aspects are set out in the appended claims and the technical features and advantages are also apparent from the detailed description which follows of non-limiting example embodiments of it with reference to the accompanying drawings, in which:
- Figure 1 is a schematic perspective view of a conveyor using a first preferred embodiment of the conveyor belt according to this invention;
- Figure 2 is a perspective view of a front part of the conveyor belt, showing in particular the connecting zone between the upper stretch for feeding the products and the lower stretch for return of the belt;
- Figure 3 is a schematic front view of the connecting stretch of the conveyor belt;
- Figure 4A is a schematic side view of the connecting stretch of the conveyor belt;
- Figure 4B is a schematic longitudinal cross section of the connecting stretch of Figure 4A;
- Figure 5 shows a perspective view of a first preferred embodiment of the link of the conveyor belt according to the invention;
- Figure 6 is a schematic top plan view of the first preferred embodiment of the link;
- Figure 7 is a rear view of the first preferred embodiment of the link;
- Figure 8A is a side view of the first preferred embodiment of the link;
- Figure 8B is a longitudinal cross section through the line A-A of Figure 7 of the first preferred embodiment of the link;
- Figure 9 is a bottom plan view of the first preferred embodiment of the link;
- Figure 10 is a horizontal cross section through line B-B of Figure 7;
- Figure 11 is a top view of a second preferred embodiment of the link, fitted with means for engaging the products to be conveyed;
- Figure 12 shows a front view of the second preferred embodiment of the link;
- Figure 13 shows a side view of the second preferred embodiment of the link;
- Figure 14 is a transversal cross section of the second preferred embodiment of the link.

### Detailed description of preferred embodiments of the invention

The invention is defined by independent claim 1. Embodiments of the invention become apparent from the dependent claims.

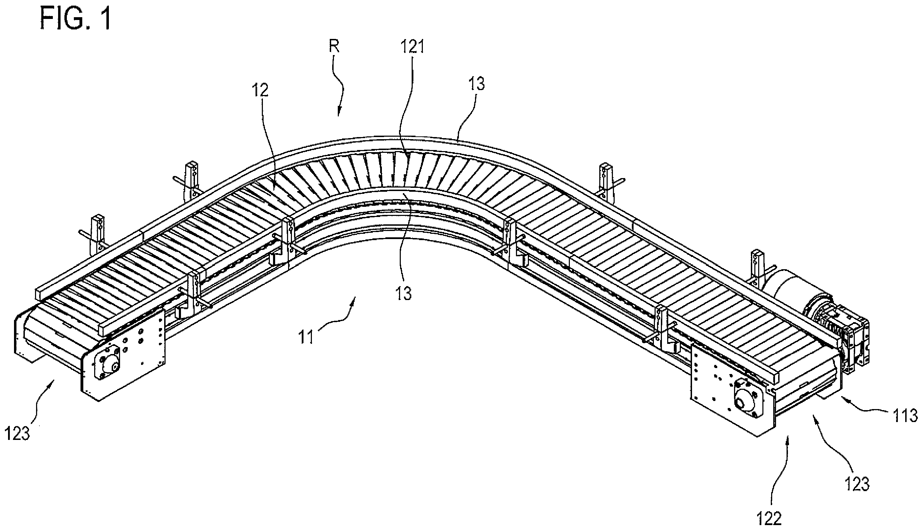

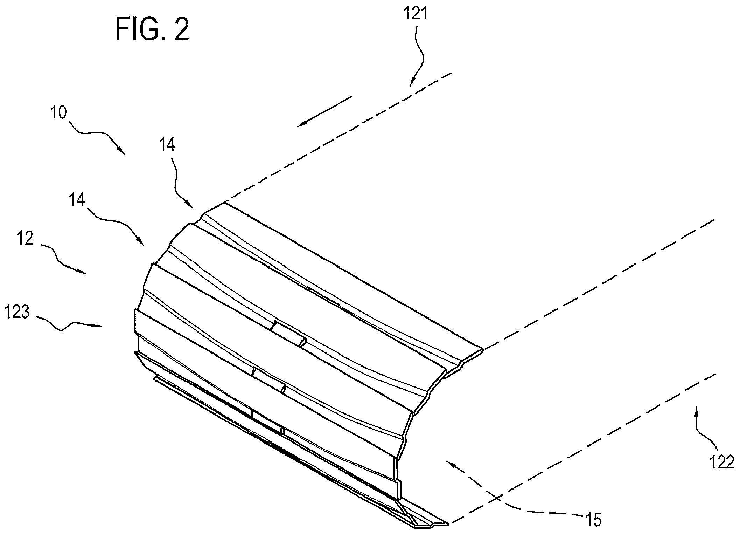

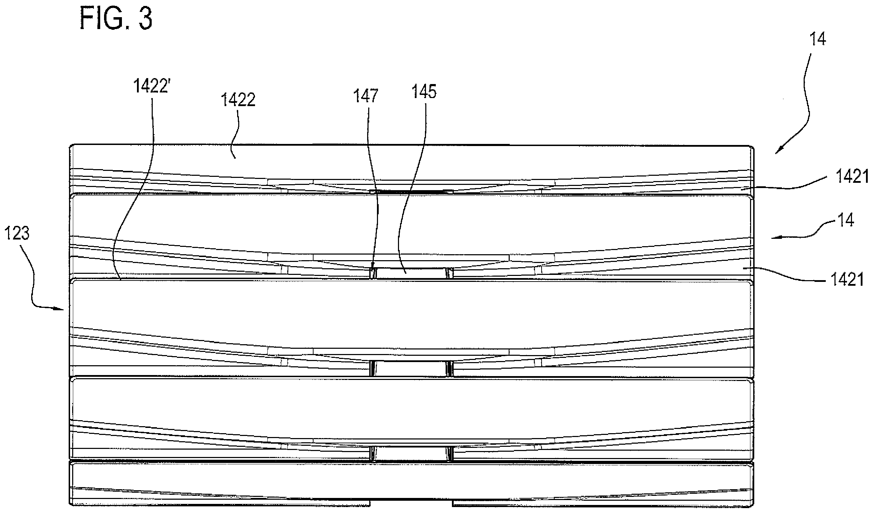

Figures 1 to 4B show a conveyor 10 for conveying products in particular in a respective plant, industrial machine or working zone, the conveyor comprising a supporting frame 11 and a conveyor belt 12 with articulated links.

As shown in Figure 1, the conveyor belt 12 extends according to a closed loop configuration, and has, in use, a respective positive stretch 121, defining the path for conveying or forward movement of the products, and a negative stretch 122, defining a path for return of the belt towards the end for picking up the products or the start of the positive stretch of the conveyor belt, the negative stretch 122 of the conveyor belt extending below the positive conveying stretch 121.

As illustrated, in particular in Figure 1, the conveyor extends between respective ends, defining a corresponding product conveying surface, which extends transversely between respective lateral centring or lateral containing guides for the products conveyed by the conveyor belt, the guides being labelled 13, 13 in Figure 1.

In turn, the supporting frame 11 comprises corresponding uprights, not illustrated in the accompanying drawings, preferably resting on the ground, and supporting respective lateral side panels 113 and corresponding longitudinal supporting profiles, extending along the feed direction of the belt, which are also, however, not illustrated in detail in the accompanying drawings, which support respective sliding and guiding means for the links of the conveyor belt.

More specifically, the path of the conveyor belt may have one or more curved stretches R in the horizontal plane or in the plane corresponding to the supporting plane of the products.

Moreover, the conveyor belt 10 has at least a first and a second curved connecting end stretch 123, 123 between the positive stretch and the negative stretch of the endless path of the conveyor belt.

More specifically, the accompanying drawings from 1 to 4B show in particular the curved connecting stretch 123, which extends from the positive feed stretch 121 to the return stretch 122 of the same belt.

More specifically, as illustrated, the curved connecting stretch defines a respective path angularly extended over 180°, which extends in a plane perpendicular to the belt, that is, in particular perpendicular to the conveying plane of the product or to the transversal plane of extension of the links of the belt.

As illustrated, at the curved connecting end stretches there is a respective gear wheel 15, which guides and/or pulls, meshing directly the links of the conveyor belt.

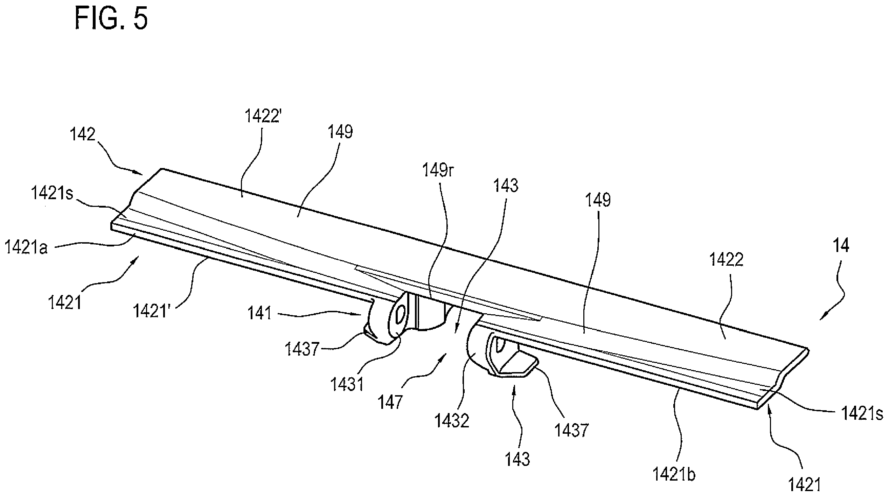

As may be clearly inferred in particular with reference to Figures 5 to 9, each link 14 of the conveyor belt 12 comprises a portion 141, mainly with longitudinal extension, which defines means for articulated connection to the adjacent links of the conveyor belt, and which - in use - in the closed loop configuration of the belt, is located internally, supporting a portion, extending transversely, 142, defining the surface or the means of sustaining the product to be conveyed and which, in use, in the closed loop configuration, is outside the link.

As illustrated, the portion 142 of the link, which is designed to sustain the product to be conveyed, comprises a lowered part 1421 and a raised part 1422.

In other words, the product sustaining portion 142 of the link comprises a part perpendicularly lowered and a part perpendicularly raised.

The lowered part 1421 is located in front of the raised part 1422, according to the feed or forward movement direction of the belt.

Advantageously, the respective longitudinal end 1422', in particular the rear end, of the raised part 1422 is designed to position itself at the main stretches, in particular straight stretches, for feeding and returning the belt, perpendicularly above the longitudinal end, in particular the front end, 1421' of the lowered part 1421 of the adjacent link, in particular of the following or next link positioned in the belt.

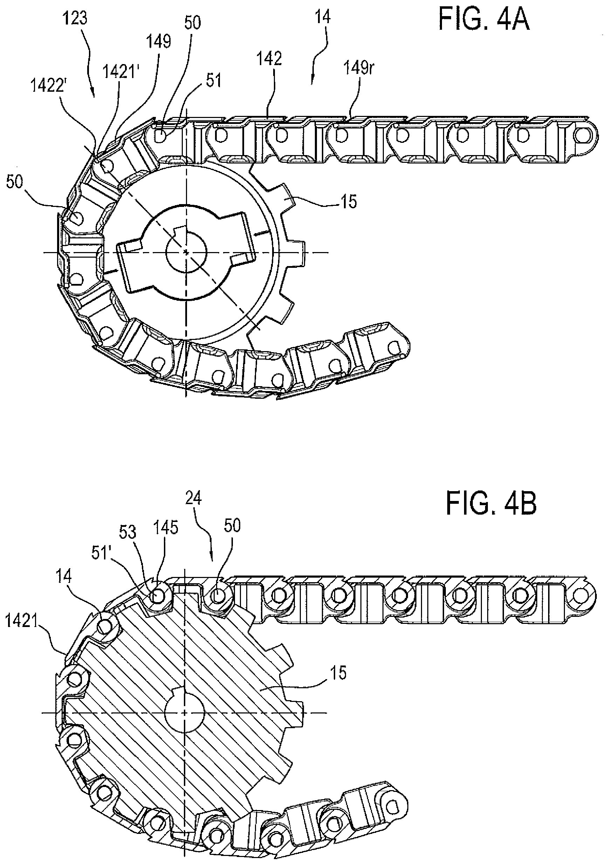

The respective longitudinal end, in particular the rear end, 1422' of the raised part 1422 of the link of the belt is designed to position itself, also in the curved connecting stretch 123 of the belt, radially on, or radially on the extension of, the longitudinal end, in particular the front end, 1421' of the lowered part 1421 of the adjacent link, in particular of the next link, of the same belt, as may be clearly inferred from Figure 4A.

The respective longitudinal end, in particular the rear end 1422' of the raised part 1422 is, in the curved connecting stretch 123 of the belt, radially distanced from the corresponding longitudinal end, in particular the front end, 1421' of the lowered part 1421 of the adjacent link, in particular the following link, in such a way as to form between these a space with a size less than the dimensions of the fingers of a person.

In this way, this advantageously avoids, at the connecting stretches which curve in a plane perpendicular to the belt, any risk for the personnel of accidental insertion of the fingers between the links of the conveyor with the consequent risk of suffering injuries or the like.

In turn, the inner articulated connection portion 141 comprises in the direction of use, a front longitudinal part 143 for articulated connection of the preceding link and a rear longitudinal part 145 for articulated connection of the link which follows.

The longitudinal articulated connection parts of the link are in the form of a corresponding receiving part 143 and a corresponding insertion part 145 respectively designed to be coupled, in an articulated fashion, with corresponding insertion and receiving parts of the adjacent links.

The receiving part 143 of the link is provided, according to the feed direction in use of the belt, in front of the insertion part 145 of the same link.

The receiving part 143 and the insertion part 145 of the articulated connection portion 141 of the link are respectively at the lowered part 1421 and the raised part 1422 of the portion 142 for sustaining the product of the same link.

In practice this link 14 of the conveyor belt with articulated links 12 has a front part, according to the normal drive or forward movement direction of the product of the conveyor belt, and a rear part.

The respective link has a front part which is defined, as will become clearer in the description below, by a lowered part of the transversal product sustaining portion of the link and by a corresponding receiving part of the articulated connection portion of the link, which receives the insertion or coupling part of the adjacent link of the belt which is positioned in front.

The respective link has a rear part which is defined by a perpendicularly raised part, relative to the lowered part, of the product sustaining portion of the link, and a part of the articulated connection portion, which is designed to be inserted in a corresponding receiving part of the link which follows.

In turn, the insertion part 143 is in the form of a corresponding block 145, which is designed to be inserted in the receiving part of the corresponding adjacent link.

As illustrated, the perpendicular wings 1431, 1432 are connected to the block 145 through corresponding connecting portions 1435 convergent towards the block part 145.

Moreover, as illustrated, at the free or inner end of the wings 1431, 1432 there are flaps projecting towards the lateral ends of the link, the flaps being denoted by the reference 1437, 1437 and they are designed to form corresponding means for sliding on corresponding guides, in particular provided on the longitudinal profile of the conveyor.

According to the invention, the lowered sustaining portion 1421 of the product sustaining portion of the link comprises a first and a second side by side segment 1421a, 1421b, which extend laterally from a central gap 147, which is longitudinally and perpendicularly open and is designed to receive the insertion and articulated connection part 145 of the adjacent link, in particular of the link preceding it along the feed direction of the belt. Advantageously, the insertion and articulated connection part, or block, 145 of the link has a respective outer surface 145', in particular an upper surface in the positive product feed stretches, which is positioned, at least in the positive feed stretches of the product, at the same level or coplanar with the outer surface, in particular an upper surface, 1421s of the lowered part 1421a, 1421b of the product sustaining portion 142 of the adjacent link.

Advantageously, the sustaining portion 142 of the link, in particular the lowered part 1421 thereof, has a front transversal edge 1421' or 1421f, in particular which is defined by the corresponding front edges of the respective side by side segments 1421a, 1421b of the lowered part 1421, the transversal edge of which extends in a rectilinear or linear fashion, in particular perpendicular to the longitudinal direction of forward movement or extension of the link.

Advantageously, the sustaining portion 142 of the link, in particular the raised part 1422 thereof, has a rear transversal edge 1422" or 1422p, which extends in a rectilinear or linear fashion, in particular perpendicular to the longitudinal direction of forward movement or extension of the link. Advantageously, the articulated connection portion 141 of the link comprises the respective insertion part, in particular the block part, 145, projecting longitudinally, in particular projecting backwards, beyond the respective transversal edge longitudinally at the end, in particular at the rear end, 1422p of the portion 142 for sustaining the link, in particular of the raised part 1422 for sustaining the product.

The articulated connection portion of the link 141 comprises the respective receiving part, in particular the perpendicular articulated connection wings 1431, 1432, which are longitudinally slightly projecting, in particular slightly projecting forwards, relative to the transversal edge at the end, in particular at the front end, of the portion for sustaining the product, in particular of the lowered part 1421 for sustaining the product.

The raised part 1422 of the product sustaining portion 142 has an inner surface, or lower surface in the positive feed stretches, which is located at a height, or perpendicular level, which is slightly higher than that of the outer surface, or upper surface, of the lowered part 1421 of the same sustaining portion of the link, in such a way that it is positioned, in use, outside, or above, the upper surface of the lowered part.

In this way, a suitable configuration is defined to prevent the risk of inserting parts, in particular fingers of the personnel, between the portions sustaining adjacent links.

As illustrated, advantageously, between the raised part 1422 and the lowered part 1421 of the product sustaining portion 142 of the link, an intermediate connecting edge, or part, 149 extends.

The intermediate connecting edge, or part, 149 has, as clearly shown in the accompanying drawings, the general shape in a plan view of a "V", with enlarged wings, that is, it has respective branches which are inclined, or angularly spaced, and mutually converging, to each other.

In this way, it is possible to allow the execution of curved stretches with a predetermined and desired width in the plane in which the outer surface for sustaining the product 142 lies.

As illustrated, the intermediate connecting edge, or part, 149 has a respective vertex with a "V" configuration , or vertex joining the respective branches, facing forwards, that is to say, in the feed direction of the conveyor belt.

Advantageously, as illustrated, the central part, in particular the vertex, of the "V" configuration of the intermediate connecting edge, or part, 149 leads to the central gap 147 for receiving the insertion part, or block, 145 of the adjacent link, in particular of the preceding link.

Advantageously, as illustrated, the opposite lateral parts, or stretches of the "V" configuration of the intermediate edge, or part, 149 connect to a corresponding lateral segment 1421a, 1421b of the lowered part 1421 of the product sustaining portion 142.

As illustrated, there are means for articulated connection between the links of the conveyor belt.

The articulated connection means comprise a respective pin 50, which is designed to connect together adjacent links.

Each link is connected, through a first and a second pin 50, 50, respectively, to a preceding link and a following link.

The articulated connection pin 50 is inserted in respective hole means provided in the receiving part, in particular in respective holes transversely aligned provided in the perpendicular wings 1431, 1432, which are labelled with the reference numeral 51 in the accompanying drawings.

The articulated connection pin is also inserted in a respective hole 53 which is provided in the respective insertion part of the respective link, in particular in the central insertion block 145.

More specifically, the respective insertion part, or head, 145 has a hole 53, which, starting from a respective central diameter "D", is flared or diverges towards the lateral end of the same through hole, in such a way as to allow relative rotation between adjacent links and the execution of corresponding curved stretches in the horizontal plane or in the plane corresponding to the product sustaining surface.

Advantageously, the respective hole 51, 51, which is made in the receiving part 143 of the articulated connection portion of the link 142, is perpendicularly at, in particular perpendicularly below, the portion for sustaining the product, in particular the lowered part 1421 of the portion 142 for sustaining the product.

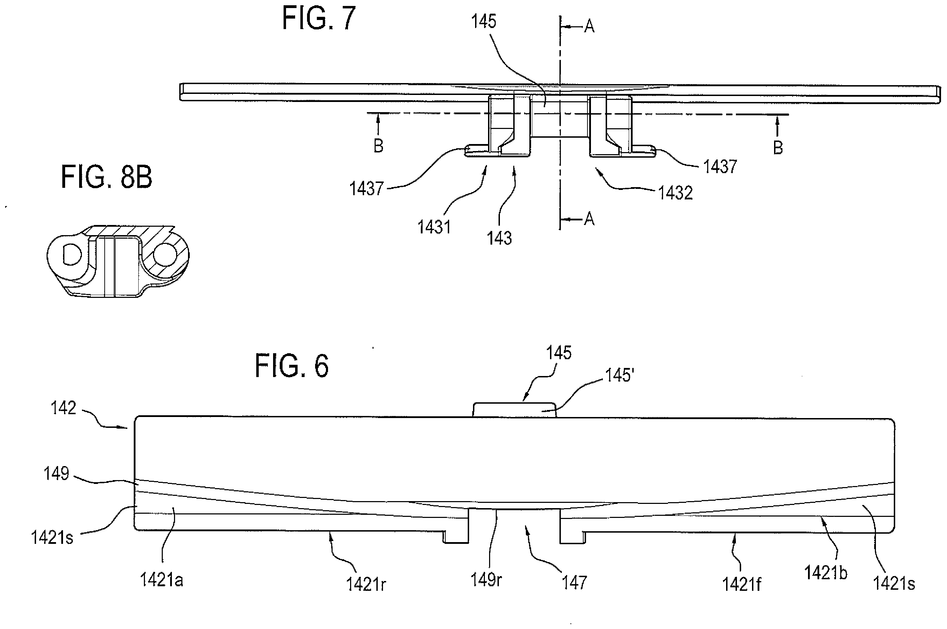

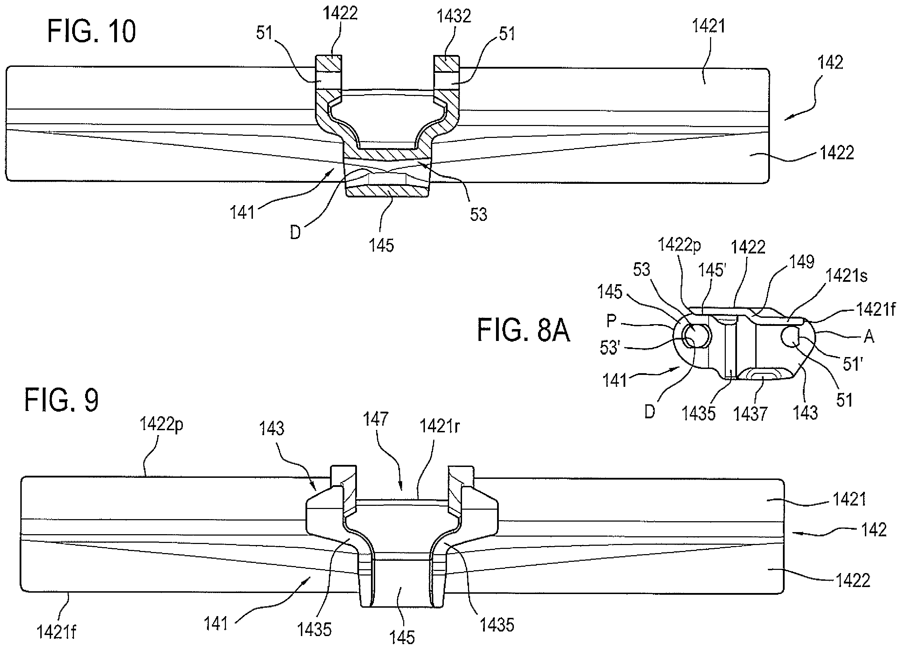

More specifically, as may be well inferred from Figure 8A, advantageously, for accident prevention purposes, the transversal end edge of the portion 142 for sustaining the product of the link, in particular the front transversal end edge 1421f of it, that is the transversal end edge of the lowered part 1421, extends longitudinally beyond the longitudinal end edge of the hole 51 made in the receiving part 143 of the articulated connection portion, in particular beyond the edge of the hole 51 in the latter, which faces towards the corresponding longitudinal end of the link. The longitudinal end edge being denoted by the reference 51' in the drawings.

In other words, the front articulated connection hole 51 has a respective front edge 51', which extends upstream of the lower end edge 1421f of the product sustaining portion, that is, of the lowered part 1421.

As illustrated, further advantageously, the hole 53, which is made in the receiving part, or block, 145 of the articulated connection portion of the link, is perpendicularly at, in particular perpendicularly below, the portion for sustaining the product 145, in particular the raised part 1422 of the same sustaining portion 142.

Advantageously, the longitudinal end edge 53' of the hole 53, in particular of the central portion "D" of the hole 53, and which is made in the insertion part, or block part, 145 of the link, or the edge 53' of the hole 53 in it, which is facing towards the corresponding longitudinal end of the link, is provided perpendicularly at or longitudinally positioned - in the direction of the corresponding end of the link - slightly beyond the transversal end edge of the portion 142 for sustaining the product of the link, in particular perpendicularly at, or longitudinally slightly beyond the rear transversal end edge 1422p of the raised part 1422, that is, beyond the transversal end edge 1422p of the raised part 1422 of this.

In other words, the rear edge 53' of the hole 53 provided in the insertion part, or block part, 145 extends substantially aligned perpendicularly, or positioned longitudinally slightly beyond, the rear edge 1422p of the sustaining portion 142, that is to say, the rear edge 1422p of the raised part of the raised product sustaining portion 1422 of the link.

As illustrated, the articulated connection holes 51, 51, 53 are longitudinally at the same height and are provided at the corresponding end respectively of the receiving part, or wings, 143 and of the insertion part, or block 145. As illustrated, the articulated connection holes 51, 51, 53 of the link are in the vicinity of the outer part or end of the same link.

More specifically, the articulated connection holes 51, 51, 53 are in the vicinity of the product sustaining portion 142 of the link.

As illustrated, the articulated connection holes 51, 51, 53 extend in the outer or upper part, or centre line, of the articulated connecting portion 141 of the link.

As illustrated, the articulated connection holes 51, 51, 53 are in the form of holes passing through the corresponding part of the link and extend along a respective axis transversal to the same link.

As illustrated, the receiving part, or the respective perpendicular receiving wing, of the articulated connection portion 141 comprises an arced front edge "A", connecting with the end, or front edge of the sustaining portion 142, in particular with the end, or front edge, of the corresponding lateral segments 1421s, 1421s of the sustaining portion.

More specifically, the arched front edge "A" of the respective receiving wing 1431, 1432 extends in a convex fashion in a direction longitudinal to the link, in particular at the front.

As illustrated, the insertion part, or block, 145 also has an arched rear edge "P" convex in a direction longitudinal to the link, in particular at the rear.

As illustrated, advantageously, the portion for sustaining the product 142, in particular the portion, that is to say, the lateral segments of the lowered part 1421, forms the outer or upper end, of the part, or perpendicular wings, 1431, 1432, for receiving the articulated connection portion of the link.

As illustrated, advantageously, the portion 142 for sustaining the product, in particular the raised part 1422 of it, forms the outer, or upper edge of the insertion part, or block 145 of the articulated connection portion of the link.

As illustrated, in practice, a link has been provided for a conveyor belt with articulated links and a corresponding conveyor belt which allow a desired path to be executed comprising curved stretches in the product sustaining plane and curved in a plane perpendicular to the product sustaining plane, without causing risks of insertion, in particular of the fingers of the personnel, and without requiring the use of costly and special protection systems.

As illustrated, the central gap 147 for receiving the insertion means of the adjacent link is laterally delimited by the receiving wings, that is to say, by the lateral segments of the same lowered part 1421 and delimited in front of by an edge 149r, which is longitudinally withdrawn from the end longitudinal edges, in particular the front edges, 1421f of the link. More specifically, the withdrawn edge 149r is defined by the connecting portion 149 between the lowered part and the raised part of the sustaining portion of the link.

As illustrated, the edge 149 corresponds with the vertex of the "V" configuration of the connecting portion 149.

In practice, the lateral segments 1421a, 1421b of the lowered part each comprise a configuration widened from the central end towards the respective lateral end.

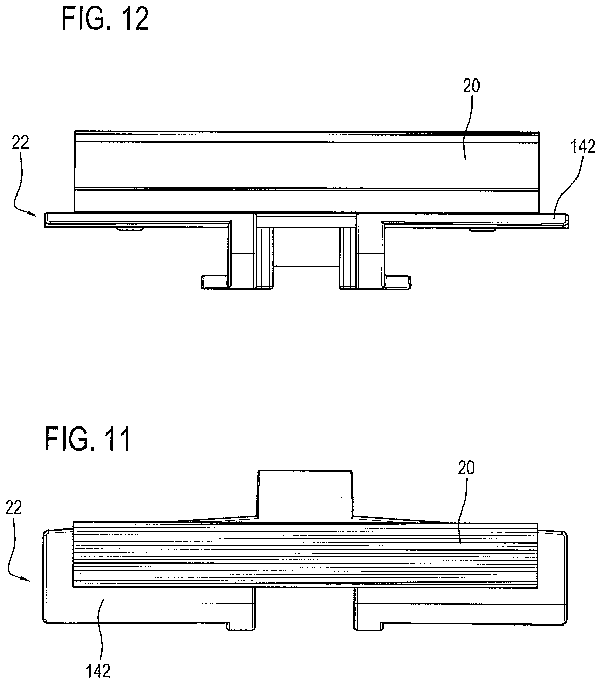

Figures 11 to 14 illustrate a second preferred embodiment of the link for the conveyor.

This second preferred embodiment 22 of the link comprises means 20 for engaging with and pulling the product.

However, it shall be understood that the means 20 for engaging the product, illustrated relative to the second preferred embodiment, are also applicable to the link of the first preferred embodiment and in particular to the raised part 1422.

In more detail, as illustrated, the link 22 comprises a protruding element 20 and, more specifically, perpendicularly protruding, for engaging and pulling, or conveying, the product, which is preferably made of flexible or elastomeric material and extends transversely along the portion 142, which is a transversal plate, for sustaining the product.

The protruding element 20 for engaging the products is fixed to the plastic body of the link by corresponding fixing means 21, which extend advantageously transversely along the protruding element 20. Advantageously, the fixing means 21 form means of stiffening the fixing means and are elongate transversely to the link, being preferably provided inside the protruding engagement element 20.

More specifically, as illustrated, the protruding engagement element 20 is in the form of a tubular elongate body defining a respective seat or longitudinal groove 201, in particular provided in the lower part this and housing the fixing means 21.

More specifically, the fixing means 21 comprise a respective elongate rod made of rigid material, preferably made of metal material.

As illustrated, the elongate rod 21 has an arched cross section, in particular the concavity of which faces the underlying supporting plate 142 of the link.

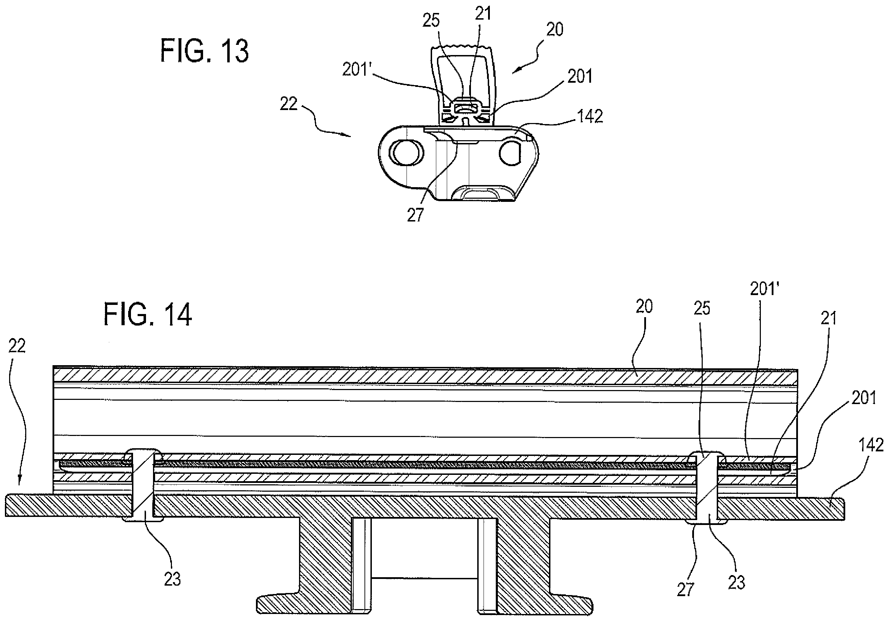

The fixing means 21 are connected to the transversal plate 142 of the link through the corresponding attaching means 23, which are clearly shown in Figure 14, which are transversely distributed along the transversal sustaining portion 142 of the link.

The fixing means are in the form of corresponding elongate shafts, in particular a first and a second elongate shaft, 23, 23, which are inserted in the same product sustaining portion 142 of the link and in the tubular body 20 for engaging the product, in particular through the lower wall of the tubular body, which rests directly on the transversal plate 142 of the link.

As illustrated, the respective connecting shaft 23 has a respective widened head 25 which is positioned and engages the top of the upper wall 201' of the seat 201 for housing the stiffening rod 21.

As illustrated, the respective connecting shaft 23 also has a respective widened head 27, which is positioned and engages, below, the plate or sustaining portion 142 of the link.

The link of the second preferred embodiment of the conveyor can also be used with the engagement portion 20 of the product, or the respective transversal product sustaining portion 142, which is provided, or positioned, vertically and acts in conjunction with an opposite conveyor belt to grip between these and jointly feed a corresponding product, in particular for lifting in height the product.

The invention described has evident industrial applications.

## Claims

1. A conveyor belt (12), of the type with articulated links, usable for conveying products, in particular in a respective plant, industrial machine or working area; the respective link (14) of the conveyor comprising an inner portion (141) for articulated connection to the adjacent links of the conveyor belt, supporting an outer portion, extending transversally, (142) for sustaining the product to be conveyed and comprising a lowered part (1421) and a raised part (1422); said outer portion being a transversal plate; said inner portion (141) comprising a front longitudinal part (143) for articulated connection to the preceding link and a rear longitudinal part (145) for articulated connection to the following link which are respectively in the form of a corresponding receiving part (143) and a corresponding insertion part (145) for corresponding parts of the adjacent links; the receiving part (143) comprising a first and a second perpendicular wing (1431, 1432), transversally distanced from one another for in use receiving the insertion part (145) of the adjacent link; the insertion part (143) being in the form of a corresponding block (145) designed to be inserted in the receiving part of the adjacent link; said receiving part (143) and said insertion part (145) of the inner portion (141) of the link being respectively at said lowered part (1421) and said raised part (1422) of the plate (142) for sustaining the product of the same link; a pivot pin (50) between adjacent links being inserted in respective holes (51, 53) made in said receiving and insertion portions (143, 145) of the articulated connection portions of adjacent links which are connected to one another; said lowered part (1421) being located in front of the raised part (1422), according to the feed or forward movement direction of the belt; said conveyor belt extending according to a closed loop configuration defining at least one curved connecting stretch (123) extending in a plane perpendicular to the belt, and has, in use, a respective positive stretch (121), defining the path for conveying or forward movement of the products, and a negative stretch (122), defining a path for return of the belt towards the end for picking up the products or the start of the positive stretch of the conveyor belt, the negative stretch (122) of the conveyor belt, extending below the positive conveying stretch (121), with the respective longitudinal end (1422') of the raised part (1422) which is designed to be positioned, in the curved connecting stretch (123) of the belt, radially at, or radially on the extension of the longitudinal end (1421') of the lowered part (1421) of the adjacent link, in particular of the following link; the raised part (1422) of the product sustaining plate (142) having an inner surface, or lower surface in the positive feed stretches, which is located at a perpendicular level which is slightly higher than that of the outer surface, or upper surface, of the lowered part (1421) of the same sustaining plate of the link, in such a way that it is positioned, in use, outside, or above, the upper surface of the lowered part; wherein the respective longitudinal end (1422') of the raised part (1422) is, in the curved connecting stretch (123) of the conveyor belt, radially distanced from the corresponding longitudinal end (1421') of the lowered part (1421) of the following link in such a way as to form a space whose size is less than the dimensions of the fingers of a person; wherein the free or inner end of the wings (1431, 1432) there are flaps (1437, 1437) projecting towards the lateral ends of the link, the flaps (1437, 1437) being designed to form corresponding means for sliding on corresponding guides, in particular provided on the longitudinal profile of the conveyor; **characterised in that** said lowered sustaining part (1421) comprises a first and a second side by side segment (1421a, 1421b), extending laterally from a central gap (147) longitudinally open and designed to receive the insertion and articulated connection part (145) of the adjacent link.

2. The belt according to claim 1, **characterised in that** said insertion and articulated connection part (145) of the link comprises an outer surface (145') which is positioned, at least in the positive feed stretch, at the same level or coplanar with the outer surface of the lowered part (1421a, 1421b) of the portion (142) for sustaining the product of the adjacent link.

3. The belt according to any one of the preceding claims, **characterised in that** said the sustaining portion (142) of the link, in particular the lowered part (1421) of it, comprises a front transversal edge (1421f), in particular formed by the corresponding front edges of the respective side by side segments (1421a, 1421b) of said lowered part (1421), which extends in a straight line.

4. The belt according to any one of the preceding claims, **characterised in that** said the sustaining portion (142) of the link, in particular the raised part (1422) of it, comprises a rear transversal edge (1422p) which extends in a straight line.

5. The belt according to any one of the preceding claims, **characterised in that** said articulated connection portion (141) of the link comprises the respective insertion part, in particular the block part, (145), projecting longitudinally, in particular projecting backwards, beyond the respective transversal edge longitudinally at the end, in particular at the rear end, (1422p) of the portion (142) for sustaining the product, in particular of the raised part (1422) for sustaining the product; and/or **in that** said articulated connection portion of the link (141) comprises the respective receiving portion, in particular the perpendicular articulated connection wings (1431, 1432), which are longitudinally slightly projecting, in particular slightly projecting forwards, relative to the respective transversal edge longitudinally at the end, in particular at the front end, (1421f, 1421f) of the portion (142) for sustaining the product, in particular of the lowered part (1421) for sustaining the product.

6. The belt according to any one of the preceding claims, **characterised in that** an intermediate connecting edge (149) extends between the raised part (1422) and the lowered part (1421) of the portion (142) for sustaining the product; preferably said intermediate connecting edge (149) has a general "V" shape in plan view; and in particular said intermediate connecting edge (149) has the vertex of the "V" configuration pointing forward or according to the direction of feed of the conveyor belt;

7. The belt according to claim 6, **characterised in that** the central part, in particular the vertex, of the "V" configuration of said intermediate edge (149) leads to the slot (147) for receiving the insertion part (145) of the adjacent link, in particular of the preceding link, and/or the lateral parts of the "V" configuration of said intermediate edge (149) are connected to corresponding lateral segments (1421a, 1421b) forming the lowered part (1421) of the portion (142) for sustaining the product.

8. The belt according to any one of the preceding claims, **characterised in that** the respective hole (51) made in the receiving part (143) of the articulated connection portion of the link is perpendicularly at, in particular perpendicularly below, the portion for sustaining the product, in particular the lowered part (1421) of the portion (142) for sustaining the product.

9. The belt according to any one of the preceding claims, **characterised in that** the transversal end edge of the portion (142) for sustaining the product of the link, in particular the front transversal end edge (1421f) of it, extends longitudinally beyond the longitudinal end edge of the hole (51) made in the receiving part (143), in particular beyond the edge of the hole (51) in the latter which faces towards the corresponding longitudinal end of the link.

10. The belt according to any one of the preceding claims, **characterised in that** the hole (53) made in the insertion part (145) of the articulated connection portion of the link is perpendicularly at, in particular perpendicularly below, the portion for sustaining the product, in particular the raised part (1422) of the self-same portion (142) for sustaining the product; in particular the longitudinal end edge (53') of the central portion (D) of the hole (53) made in the insertion part (145) of the link, or the edge (53') of the hole (53) in it facing towards the corresponding longitudinal end of the link, is provided perpendicularly at or longitudinally slightly beyond the transversal end edge of the portion (142) for sustaining the product of the link, in particular at or beyond the rear transversal end edge (1422p) of it.

11. The belt according to any one of the preceding claims, **characterised in that** a raised rear part (1422) comprises the respective rear end which is designed to be positioned, at feed stretches of the belt, perpendicularly above, or perpendicularly aligned with, the front end of the lowered part (1421) of the following link of the belt.

12. The belt according to any one of the preceding claims, **characterised in that** the portion (142) for sustaining the product, in particular the lowered portion, or the lateral segments of the lowered part (1421), forms the upper or outer end of the receiving part or perpendicular wings (1431, 1432) of the articulated connection portion of the link; and/or the portion (142) for sustaining the product, in particular the raised part (1422) of it, forms the outer, or upper edge of the insertion part, or block (145) of the articulated connection portion of the link.

## Patentansprüche

1. Förderband (12) des Typs mit Gelenkhebeln, das zum Fördern von Produkten, insbesondere in einer entsprechenden Anlage, Industriemaschine oder Arbeitsbereich, verwendbar ist; wobei der jeweilige Hebel (14) des Förderers einen inneren Teil (141) für eine gelenkige Verbindung mit den benachbarten Hebeln des Förderbandes umfasst, der einen äußeren Teil trägt und sich quer (142) zum Stützen des zu fördernden Produkts erstreckt und einen abgesenkten Teil (1421) und einen erhöhten Teil (1422) umfasst, wobei der äußere Teil eine Querplatte umfasst, wobei der innere Teil (141) einen vorderen Längsteil (143) für eine gelenkige Verbindung mit dem vorherigen Hebel und einen hinteren Längsteil (145) für eine gelenkige Verbindung mit dem nachfolgenden Hebel umfasst, die jeweils in Form eines entsprechenden Empfangsteils (143) und eines entsprechenden Einsteckteils (145) für entsprechende Teile der benachbarten Hebel vorliegen; wobei der Empfangsteil (143) einen ersten und einen zweiten senkrechten Flügel (1431, 1432) umfasst, die quer voneinander mit Abstand angeordnet sind, um im Gebrauch das Einsteckteil (145) des benachbarten Hebels zu empfangen; wobei das Einsteckteil (143) in Form eines entsprechenden Blocks (145) vorliegt, der dazu bestimmt ist, in das Empfangsteil des benachbarten Hebels eingesteckt zu werden; wobei sich das Empfangsteil (143) und das Einsteckteil (145) des inneren Anteils (141) des Hebels jeweils an dem abgesenkten Teil (1421) und dem erhöhten Teil (1422) der Platte (142) befinden, um das Produkt desselben Hebels zu stützen; wobei ein Drehzapfen (50) zwischen benachbarten Hebeln in entsprechenden Bohrungen (51, 53) eingesetzt ist, die in den Empfangs-und Einsteckteilen (143, 145) der schwenkbaren Verbindungsteile von benachbarten Hebeln ausgebildet sind, die miteinander verbunden sind; wobei der abgesenkte Teil (1421) gegenüber dem angehobenen Teil (1422) in Übereinstimmung mit der Zuführbewegung oder einer Vorwärtsrichtung des Bandes angeordnet ist; wobei sich das Förderband in Form eines geschlossenen Kreises erstreckt, die mindestens einen gekrümmten Verbindungsabschnitt (123) definiert, der sich in einer Ebene senkrecht zum Band erstreckt und einen entsprechenden im Gebrauch positiv gestreckten Teil (121), der den Weg für einen Transport oder eine Vorwärtsbewegung der Produkte definiert, und einen negativ gestreckten Teil (122), aufweist, der einen Weg für die Rückführung des Bandes zum Ende und zum Empfangen der Produkte oder zum Anfang des positiv gestreckten Teils des Förderbandes definiert, wobei sich der negative Teil (122) des Förderbandes unterhalb des positiven Teil (121) erstreckt, wobei das jeweilige Längsende (1422) des erhöhten Teils (1422) zur Positionierung in der gekrümmten Verbindungsteil ausgebildet (123) des Bandes, entweder in radialer Richtung oder in einer entsprechenden radialen Richtung an der Verlängerung des Längsendes (1421') des abgesenkten Teils (1421) des angrenzenden Hebels, insbesondere des nachfolgenden Hebels; wobei der erhabene Teil (1422) der Produktträgerplatte (142) eine innere Oberfläche oder eine untere Oberfläche in den gestreckten Teilen mit positiver Zufuhr aufweist, die sich auf einer senkrechten Ebene befindet, die etwas höher als die äußere Oberfläche oder die obere Oberfläche des abgesenkten Teils (1421) der gleichen Stützplatte des Hebels ist, so dass diese im Gebrauch außerhalb oder über der oberen Fläche des abgesenkten Teils positioniert ist, wobei sich das jeweilige Längsende (1422') des angehobenen Teils (1422) radial mit Abstand in dem gekrümmten Verbindungsabschnitt (123) des Förderbandes, vom entsprechenden Längsende (1421') des abgesenkten Teils (1421) des nachfolgenden Hebels befindet, um einen Raum zu bilden, dessen Abmessungen kleiner als die Abmessungen der Finger einer Person sind, wobei am freien oder inneren Ende der Flügel (1431, 1432) Rippen (1437, 1437) vorhanden sind, die zu den seitlichen Enden des Hebels vorstehen, wobei die Rippen (1437, 1437) dazu vorgesehen sind, um entsprechende Mittel zum Gleiten auf entsprechenden Führungen zu bilden, die insbesondere auf dem Längsprofil des Förderers vorgesehen sind, **dadurch gekennzeichnet, dass** das abgesenkte Stützteil (1421) ein erstes und ein zweites Segment (1421a, 1421b) umfasst, die sich gegenseitig nähern und in seitlicher Richtung durch einen zentralen leeren Raum (147) erstrecken, der in Längsrichtung offen ist, um das Einsteck-und Verbindungsteil (145) des angrenzenden Hebels aufzunehmen.

2. Band nach Anspruch 1, **dadurch gekennzeichnet, dass** das gelenkige Einsteck-und Verbindungsteil (145) des Hebels eine Außenfläche (145') umfasst, die zumindest in dem positiv gestreckten Zufuhrteil an derselben Höhe oder in derselben Ebene wie die Außenfläche des abgesenkten Teils (1421a, 1421b) des Teils (142) liegt, um das Produkt des benachbarten Hebels zu stützen.

3. Band nach einem der vorhergehenden Ansprüche, **dadurch gekennzeichnet, dass** der Stützteil (142) des Hebels, insbesondere dessen abgesenkter Teil (1421), eine vordere Querkante (1421f) aufweist, die insbesondere durch die entsprechenden Vorderkanten von jeweiligen nebeneinander gelegten Segmenten (1421a, 1421b) des abgesenkten Teils (1421) angeordnet sind, der sich geradlinig erstreckt.

4. Band nach einem der vorhergehenden Ansprüche, **dadurch gekennzeichnet, dass** der Stützteil (142) des Hebels, insbesondere dessen erhöhte Teil (1422), eine hintere Querkante (1422p) aufweist, die sich geradlinig erstreckt.

5. Band nach einem der vorangehenden Ansprüche, **dadurch gekennzeichnet, dass** das gelenkige Verbindungsteil (141) des Hebels das jeweilige Einsteckteil, insbesondere das Sperrteil (145) aufweist, das in Längsrichtung, insbesondere nach hinten, über die jeweilige Querkante längs am Ende, insbesondere am hinteren Ende (1422p) des Teils (142) zum Stützen des Produkts, insbesondere des erhöhten Teils (1422) zum Stützen des Produkts, hinausragt; und/oder dass das gelenkige Verbindungsteil des Hebels (141) das jeweilige Aufnahmeteil, insbesondere die senkrechte gelenkige Verbindungsflügel (1431, 1432), umfasst, die in Bezug auf die jeweilige Querkante in Längsrichtung leicht nach vorne in Längsrichtung am Ende, insbesondere am vorderen Ende (1421f, 1421f) des Teils (142) zum Stützen des Produkts, insbesondere des abgesenkten Teils (1421) zum Stützen des Produkts, vorspringen.

6. Band nach einem der vorangehenden Ansprüche, **dadurch gekennzeichnet, dass** sich zwischen dem erhöhten Teil (1422) und dem abgesenkten Teil (1421) des Teils (142) eine Zwischenverbindungskante (149) erstreckt, um das Produkt zu stützen; wobei vorzugsweise die Zwischenverbindungskante (149) gemäß einer Draufsicht eine generische "V"-Form aufweist; und insbesondere weist die Zwischenverbindungskante (149) den Scheitelpunkt der "V"-Konfiguration auf, der nach vorne oder entsprechend der Zuführrichtung des Förderbandes weist.

7. Band nach Anspruch 6, **dadurch gekennzeichnet, dass** der Mittelteil, insbesondere der Scheitelpunkt der "V"-Konfiguration der Zwischenverbindungskante (149), in den Schlitz (147) mündet, um das Einsteckteil (145) des angrenzenden Hebels, insbesondere des vorherigen Hebels, aufzunehmen, und/oder wobei die Seitenteile der "V"-Konfiguration der Zwischenverbindungskante (149) mit entsprechenden Seitensegmenten (1421a, 1421b) verbunden sind, die den abgesenkten Teil (1421) des Teils (142) zum Stützen des Produkts bilden.

8. Band nach einem der vorhergehenden Ansprüche, **dadurch gekennzeichnet, dass** die jeweilige Bohrung (51) im Empfangsteil (143) des gelenkigen Verbindungsteils des Hebels senkrecht, insbesondere senkrecht unterhalb des Teils zum Stützen des Produkts, insbesondere des abgesenkten Teils (1421) des Teils (142) zum Stützen des Produkts, angeordnet ist.

9. Band nach einem der vorhergehenden Ansprüche, **dadurch gekennzeichnet, dass** die Endquerkante des Teils (142) des Hebels zum Stützen des Produkts, insbesondere dessen vordere Endquerkante (1421f), sich in Längsrichtung über das Längsende hinaus der Bohrung (51) erstreckt, die im Empfangsteil (143), insbesondere über die Kante der Bohrung (51) im Teil vorgesehen ist, der dem entsprechenden Längsende des Hebels zugewandt ist.

10. Band nach einem der vorhergehenden Ansprüche, **dadurch gekennzeichnet, dass** die im Einsteckteil (145) vorgesehene Bohrung (53) des gelenkigen Verbindungsteils des Hebels senkrecht, insbesondere in senkrechter Richtung, unter dem Teil zum Stützen des Produkts, angeordnet ist, wobei insbesondere der erhöhte Teil (1422) desselben Teils zum Stützen des Produkts (142), insbesondere die Endlängskante (53') des mittleren Teils (D) der Bohrung (53), in dem Einsteckteil (145) des Hebels bzw. die Kante (53') der Bohrung (53) innerhalb des letzteren, dem entsprechenden Längsende des Hebels zugewandt ist, und entweder senkrecht zu dem oder geringfügig hinter der Endquerkante des Teils (142) des Hebels zum Stützen des Produkts, insbesondere an oder jenseits der Endquerkante (1422p) desselben, angeordnet ist.

11. Band nach einem der vorangehenden Ansprüche, **dadurch gekennzeichnet, dass** ein erhabener hinterer Teil (1422) das jeweilige hintere Ende umfasst, das dazu bestimmt ist, bei Zufuhrabschnitten des Bandes und senkrecht darauf oder senkrecht ausgerichtet, mit dem vorderen Ende des abgesenkten Teils (1421) des nächsten Hebels des Bandes, positioniert zu werden.

12. Band nach einem der vorhergehenden Ansprüche, **dadurch gekennzeichnet, dass** der Teil (142) zum Stützen des Produkts, insbesondere entweder der abgesenkte Teil oder die seitlichen Segmente des abgesenkten Teils (1421), das obere oder äußere Ende des Empfangsteils oder senkrechte Flügel (1431, 1432) des gelenkigen Verbindungsteils des Hebels; und/oder wobei das Teil (142) zum Stützen des Produkts, insbesondere dessen erhabener Teil (1422), die äußere oder obere Kante des Einsteckteils, oder einen Block (145) des gelenkigen Verbindungsteils des Hebels bildet.

## Revendications

1. Bande transporteuse (12), du type à leviers articulés, utilisable pour le transport de produits, notamment dans une respective usine, machine industrielle ou zone de travail ; le levier respectif (14) du convoyeur comprenant une partie interne (141) pour une liaison articulée avec les leviers adjacents de la bande transporteuse, supportant une partie externe, qui s'étend en sens transversal (142) pour supporter le produit à transporter et comprenant une partie abaissée (1421) et une partie surélevée (1422), la partie externe étant une plaque transversale, la partie interne (141) comprenant une partie longitudinale avant (143) pour une liaison articulée avec le levier précédent et une partie longitudinale arrière (145) pour une liaison articulée avec le levier suivant, qui ont respectivement la forme d'une partie de logement correspondante (143) et d'une partie d'insertion correspondante (145) pour des parties correspondantes des leviers adjacents ; la partie de logement (143) comprenant une première et une seconde aile perpendiculaire (1431, 1432), espacées transversalement l'une de l'autre pour loger lors de l'utilisation la partie d'insertion (145) du levier adjacent ; dans laquelle la partie d'insertion (143) a la forme d'un bloc correspondant (145) destiné à être inséré dans la partie de logement du levier adjacent ; la partie de logement (143) et la partie d'insertion (145) de la partie interne (141) du levier étant respectivement au niveau de la partie abaissée (1421) et de la partie surélevée (1422) de la plaque (142) pour supporter le produit du même levier ; un axe pivotant (50) entre des leviers adjacents étant inséré dans des trous respectifs (51, 53) formés dans les parties de logement et d'insertion (143, 145) des parties de connexion articulées de leviers adjacents qui sont connectés les uns aux autres ; la partie abaissée (1421) étant située en face de la partie surélevée (1422) conformément au mouvement d'alimentation ou à une direction vers l'avant de la bande ; dans laquelle la bande transporteuse s'étend avec une conformation en circuit fermé, qui définit au moins une partie étirée de connexion incurvée (123) développée dans un plan perpendiculaire à la bande, et a une partie étirée positive respective pendant l'utilisation (121), qui définit un chemin de transport ou d'avance des produits, et une partie étirée négative (122) qui définit un chemin de retour de la bande vers l'extrémité de prise des produits ou vers le début de la partie étirée positive de la bande transporteuse, la partie étirée négative (122) de la bande transporteuse s'étendant au-dessous de la partie étirée positive (121), l'extrémité longitudinale respective (1422) de la partie surélevée (1422) étant destinée à être positionnée, dans la partie étirée incurvée (123) de la bande, selon une direction radiale ou correspondante à une extension radiale de l'extrémité longitudinale (1421') de la partie abaissée (1421) du levier adjacent, notamment du levier suivant ; la partie surélevée (1422) de la plaque de support du produit (142) ayant une surface interne, ou surface inférieure dans les parties étirées d'alimentation positives, qui est située à un niveau perpendiculaire qui est légèrement supérieur à celui de la surface externe, ou surface supérieure, de la partie abaissée (1421) de la même plaque de support du levier, de sorte que celle-ci soit positionnée lors de l'utilisation à l'extérieur ou au-dessus de la surface supérieure de la partie abaissée, dans laquelle la respective extrémité longitudinale (1422') de la partie surélevée (1422) est située, dans la partie étirée de connexion incurvée (123) de la bande transporteuse, radialement espacée de l'extrémité longitudinale correspondante (1421') de la partie abaissée (1421) du levier suivant, de sorte à former un espace dont les dimensions sont inférieures aux dimensions des doigts d'une personne, dans laquelle à l'extrémité libre ou interne des ailes (1431, 1432) il y a des ailettes (1437, 1437) en saillie vers les extrémités latérales du levier, les ailettes (1437, 1437) étant prévues pour former des moyens correspondants de coulissement sur des guides correspondants, notamment obtenus sur le profil longitudinal du convoyeur, **caractérisée en ce que** la partie de support abaissée (1421) comprend un premier et un second segment (1421a, 1421b) disposés côte à côte et développés dans une direction latérale par un espace vide central (147) ouvert dans la direction longitudinale et prévu pour loger la partie d'insertion et de connexion articulée (145) du levier adjacent.

2. Bande selon la revendication 1, **caractérisée en ce que** la partie d'insertion et de connexion articulée (145) du levier comprend une surface externe (145') qui est positionnée, au moins dans la partie d'alimentation étirée positive, au même niveau ou dans le même plan que la surface externe de la partie abaissée (1421a, 1421b) de la partie de support (142) du produit du levier adjacent.

3. Bande selon l'une des revendications précédentes, **caractérisée en ce que** la partie de support (142) du levier, notamment la partie abaissée (1421) de celui-ci, comporte un bord transversal avant (1421f), notamment formé par les bords avant correspondants des segments respectifs (1421a, 1421b) disposés côte à côte de la partie abaissée (1421), qui s'étend en ligne droite.

4. Bande selon l'une des revendications précédentes, **caractérisée en ce que** la partie de support (142) du levier, notamment la partie surélevée (1422) de celui-ci, comporte un bord transversal arrière (1422p), qui s'étend en ligne droite.

5. Bande selon l'une des revendications précédentes, **caractérisée en ce que** la partie de connexion articulée (141) du levier comprend la partie d'insertion respective, notamment la partie de blocage (145), qui fait saillie longitudinalement, notamment en saillie vers l'arrière, au-delà du bord transversal respectif et longitudinalement à l'extrémité, notamment à l'extrémité arrière (1422p) de la partie de support (142) du produit, notamment la partie surélevée (1422) de support du produit ; et/ou que la partie de connexion articulée du levier (141) comprend la partie de logement respective, notamment les ailes de connexion (1431, 1432) articulées dans une direction perpendiculaire, qui sont légèrement en saillie longitudinalement vers l'avant, par rapport au bord transversal respectif dans le sens longitudinal, à l'extrémité, notamment à l'extrémité avant (1421f, 1421f) de la partie de support (142) du produit, notamment de la partie abaissée (1421) de support du produit.

6. Bande selon l'une des revendications précédentes, **caractérisée en ce qu'**un bord de connexion intermédiaire (149) s'étend entre la partie surélevée (1422) et la partie abaissée (1421) de la partie de support (142) du produit ; de préférence le bord de connexion intermédiaire (149) a une forme générique en "V" selon une vue en plan ; et notamment le bord de connexion intermédiaire (149) a le sommet de la configuration en "V" tourné vers l'avant ou selon la direction d'alimentation de la bande transporteuse.

7. Bande selon la revendication 6, **caractérisée en ce que** la partie centrale, notamment le sommet de la configuration en "V" du bord intermédiaire (149) débouche sur la fente (147) pour loger la partie d'insertion (145) du levier adjacent , notamment du levier précédent, et/ou les parties latérales de la configuration en "V" du bord intermédiaire (149) étant reliées à des segments latéraux correspondants (1421a, 1421b) qui forment la partie abaissée (1421) de la partie de support (142) du produit.

8. Bande selon l'une quelconque des revendications précédentes, **caractérisée en ce que** le trou respectif (51) ménagé dans la partie de logement (143) de la partie de connexion articulée du levier est perpendiculaire, en particulier est disposé perpendiculairement au-dessous de la partie de support du produit, notamment de la partie abaissée (1421) de la partie support (142) du produit.

9. Bande selon l'une quelconque des revendications précédentes, **caractérisée en ce que** le bord d'extrémité transversal de la partie de support (142) du produit du levier, notamment le bord d'extrémité avant (1421f) de celui-ci, s'étend longitudinalement au-delà du bord d'extrémité longitudinal du trou (51) ménagé dans la pièce de logement (143), notamment au-delà du bord du trou (51) dans celle-ci, qui fait face à l'extrémité longitudinale correspondante du levier.

10. Bande selon l'une quelconque des revendications précédentes, **caractérisé en ce que** le trou (53) ménagé dans la partie d'insertion (145) de la partie de connexion articulée du levier est disposé perpendiculairement, notamment en dessous selon une direction perpendiculaire, de la partie de support du produit, notamment la partie surélevée (1422) de la même partie de support (142) du produit, notamment du bord d'extrémité longitudinal (53') de la partie centrale (D) du trou (53) ménagé dans la partie d'insertion (145) du levier, ou du bord (53') du trou (53) à l'intérieur de celui-ci, tourné vers l'extrémité longitudinale correspondante du levier, et est disposé perpendiculairement au niveau ou légèrement au-delà du bord d'extrémité transversal de la partie de support (142) du produit du levier, notamment au niveau ou au-delà du bord d'extrémité transversal (1422p) de celui-ci.

11. Bande selon l'une quelconque des revendications précédentes, **caractérisée par le fait qu'**une partie arrière surélevée (1422) comprend l'extrémité arrière respective qui est destinée à être positionnée, en correspondance avec des sections d'alimentation de la bande, perpendiculairement à la précédente, ou aligné perpendiculairement, avec l'extrémité avant de la partie abaissée (1421) du levier suivant de la bande.

12. Bande selon l'une quelconque des revendications précédentes, **caractérisée en ce que** la partie de support (142) du produit, notamment la partie abaissée, ou les segments latéraux de la partie abaissée (1421), forment l'extrémité supérieure ou externe de la partie de logement ou des ailes perpendiculaires (1431, 1432) de la partie de connexion articulée du levier, et/ou la partie de support (142) du produit, notamment la partie surélevée (1422) de celui-ci, forme le bord extérieur ou supérieur de la partie d'insertion, ou d'un bloc (145) de la partie de connexion articulée du levier.
